(19) Europäisches Patentamt
European Patent Office
Office européen des brevets

(11) **EP 4 693 194 A1**

(12) **EUROPEAN PATENT APPLICATION**
published in accordance with Art. 153(4) EPC

(43) Date of publication:
**11.02.2026 Bulletin 2026/07**

(51) International Patent Classification (IPC):
*G06T 7/73* (2017.01)    *G06F 9/451* (2018.01)

(21) Application number: **24778119.8**

(52) Cooperative Patent Classification (CPC):
**B60R 16/037; G06F 9/451; G06T 7/73; G06V 40/10; G06V 40/18**

(22) Date of filing: **28.03.2024**

(86) International application number:
**PCT/CN2024/084333**

(87) International publication number:
**WO 2024/199333 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.03.2023 CN 202310379540**

(71) Applicant: **Shenzhen Yinwang Intelligent Technologies Co., Ltd.**
**Shenzhen, Guangdong 518110 (CN)**

(72) Inventors:
• **LU, Hongwei**
**Shenzhen, Guangdong 518129 (CN)**
• **HUANG, Wei**
**Shenzhen, Guangdong 518129 (CN)**
• **HU, Fengsheng**
**Shenzhen, Guangdong 518129 (CN)**

(74) Representative: **MERH-IP Matias Erny Reichl Hoffmann**
**Patentanwälte PartG mbB**
**Paul-Heyse-Straße 29**
**80336 München (DE)**

(54) **METHOD AND APPARATUS FOR PREDICTING GAZE DISPLACEMENT, AND VEHICLE**

(57) Embodiments of this application provide a line-of-sight displacement prediction method, an apparatus, and a vehicle, including: obtaining a motion status of a target object in the vehicle in a first direction, where the first direction is perpendicular to a ground plane, and the motion status of the target object in the first direction is related to road undulations of a first road section; and predicting, based on the motion status of the target object in the first direction, line-of-sight displacement of a user carried on the target object, where the line-of-sight displacement is displacement of a line of sight of the user relative to the target object in the first direction. Based on the motion status of the target object that carries the user, the line-of-sight displacement of the user is accurately predicted, making it possible for vehicle control performed based on the line-of-sight displacement to match an actual change in a head position of the user. This improves comfort of vehicle use.

300

FIG. 3

EP 4 693 194 A1

## Description

This application claims priority to Chinese Patent Application No. 202310379540.4, filed with the China National Intellectual Property Administration on March 31, 2023 and entitled "LINE-OF-SIGHT DISPLACEMENT PREDICTION METHOD, APPARATUS, AND VEHICLE", which is incorporated herein by reference in its entirety.

## TECHNICAL FIELD

This application relates to the field of electronic technologies, and in particular, to a line-of-sight displacement prediction method, an apparatus, and a vehicle.

## BACKGROUND

With increasing development of intelligentization of vehicles, screen-based entertainment and office scenarios during riding of users become more common. However, due to road bumps, a long-time gaze at a screen easily causes discomfort, for example, obvious visual fatigue and motion sickness. Currently, to reduce discomfort caused by a gaze of the user at the screen, a motion status of a head of a passenger is measured by using a camera in a cabin, and further, a displayed image of the screen is adjusted based on the motion status of the head of the passenger, to match a presentation angle of the image and the motion status of the head of the passenger.

However, the displayed image of the screen requires a long rendering processing time. Consequently, adjusting the displayed image of the screen based on an already occurring motion status of the head of the passenger causes a delay between the displayed image and the motion status of the head of the passenger that are match each other, making it difficult to eliminate discomfort caused by a gaze of the passenger at the screen. In addition, other components (such as a rear-view mirror and a vehicle light) that need to be adjusted based on the motion status of the head of the passenger all have a problem of poor comfort of vehicle use of the passenger caused by the foregoing delay. Therefore, how to predict the motion status of the head of the passenger is a problem to be urgently resolved currently.

## SUMMARY

Embodiments of this application provide a line-of-sight displacement prediction method, an apparatus, and a vehicle, so that a motion status of a head of a passenger is accurately predicted, to improve comfort of vehicle use.

According to a first aspect, an embodiment of this application provides a line-of-sight displacement prediction method, including: obtaining a motion status of a target object in a vehicle in a first direction, where the first direction is perpendicular to a horizontal plane or is perpendicular to a cabin floor plane of the vehicle, and the target object remains stationary relative to a cabin of the vehicle; and predicting, based on the motion status of the target object in the first direction, line-of-sight displacement of a user carried on the target object, where the line-of-sight displacement is displacement of a human eye of the user relative to the target object in the first direction.

According to the line-of-sight displacement prediction method provided in the first aspect, a head position of the user is accurately predicted based on the motion status of the target object that carries the user, to avoid a case in which identification is performed after the head position of the user has changed, so that vehicle control performed based on the predicted line-of-sight displacement (for example, a rendered displayed image and an adjusted rear-view mirror angle) can match an actual change in the line-of-sight displacement of the user. This improves comfort of vehicle use.

In a possible implementation, obtaining the motion status of the target object in the vehicle in the first direction includes: obtaining a road surface excitation signal of a first road section, where the road surface excitation signal indicates excitation of the first road section on the vehicle in the first direction; and determining the motion status of the target object in the first direction based on the road surface excitation signal and a suspension model of the vehicle, where the suspension model indicates a transfer feature of transfer of the road surface excitation signal to the target object.

According to the line-of-sight displacement prediction method provided in this implementation, a control apparatus may collect a road surface excitation signal of a to-be-traveled road section by using a vision sensor, to predict the motion status of the target object in the first direction based on the road surface excitation signal. The control apparatus predicts the motion status of the target object before excitation of road undulations is transferred to the head of the user, so that the implementation displacement of the user is predicted before the line-of-sight displacement is actually generated. Further, the suspension model accurately indicates the transfer feature of transfer of the road surface excitation signal to the target object, so that the motion status of the target object can be accurately predicted.

In a possible implementation, obtaining the motion status of the target object in the vehicle in the first direction includes: obtaining acceleration information of the vehicle present when the vehicle travels on a first road section; and determining the motion status of the target object in the first direction based on the acceleration information.

According to the line-of-sight displacement prediction method provided in this implementation, a control apparatus may collect, by using an acceleration sensor, acceleration information of the vehicle present when the vehicle travels on a currently traveled road section, to determine the motion status of the target object in the first direction. The control apparatus predicts the motion status of the target object before excitation of road undulations is transferred to the head of the user, so that the implementation displacement of the user is predicted before the line-of-sight displacement is actually generated.

In a possible implementation, predicting, based on the motion status of the target object in the first direction, the line-of-sight displacement of the user carried on the target object includes: predicting, based on the motion status of the target object in the first direction and a human-seat model, the line-of-sight displacement of the user carried on the target object, where the human-seat model indicates a transfer feature of transfer of the motion status of the target object to the head of the user.

According to the line-of-sight displacement prediction method provided in this implementation, the human-seat model indicates the transfer feature of transfer of the transfer status of the target object to the head of the user, so that the line-of-sight displacement is accurately predicted.

In a possible implementation, the human-seat model is a four-degree-of-freedom human-seat lumped mass model.

According to the line-of-sight displacement prediction method provided in this implementation, the four-degree-of-freedom human-seat lumped mass model can more accurately reflect a feature of transfer of excitation in a human body, to accurately predict a line-of-sight position of the user.

In a possible implementation, the method further includes: obtaining sitting posture information of the user, where the sitting posture information indicates a sitting posture of the user in a seat; and determining a parameter of the human-seat model based on the sitting posture information.

According to the line-of-sight displacement prediction method provided in this implementation, the parameter of the human-seat model is adjusted based on the sitting posture information, so that the human-seat model can be dynamically adjusted with a change of the sitting posture of the user, to provide accurate transfer features for different sitting postures of the user. This improves accuracy of predicting the line-of-sight displacement.

In a possible implementation, the sitting posture information includes at least one of the following: information about pressure of the user on the seat at at least one contact position between the user and the seat; and a backrest angle of the seat.

According to the line-of-sight displacement prediction method provided in this implementation, the sitting posture of the user can be determined. This improves a degree of matching between the human-seat model and the sitting posture of the user, and improves accuracy of predicting the line-of-sight displacement of the user.

In a possible implementation, the target object remains stationary relative to a display apparatus in the vehicle, and the line-of-sight displacement of the user is displacement of the human eye of the user relative to the display apparatus in the first direction; and the target object carries the display apparatus in the vehicle, or the target object includes the display apparatus in the vehicle.

According to the line-of-sight displacement prediction method provided in this implementation, the displacement of the human eye of the user relative to the display apparatus in the first direction may be obtained, so that an image presented on the display apparatus is adjusted to be match the relative displacement generated between the human eye and the display apparatus. This improves comfort of using the vehicle by the user.

In a possible implementation, the method further includes: rendering a to-be-displayed image based on the line-of-sight displacement of the user carried on the target object; and displaying a rendered image by using the display apparatus, where the target object carries the display apparatus.

According to the improved line-of-sight displacement prediction method in this implementation, the display apparatus plays the displayed image rendered based on the predicted line-of-sight displacement of the user, so that the displayed image can be match a line-of-sight position of the user when a line of sight of the user actually shifts, to alleviate discomfort caused by a gaze of the user at a screen in a traveling process of the vehicle, and improve comfort of vehicle use.

According to a second aspect, an embodiment of this application provides a line-of-sight displacement prediction method, including: obtaining a motion status of a display apparatus in a vehicle in a first direction, where the first direction is perpendicular to a horizontal plane or is perpendicular to a cabin floor plane of the vehicle; and predicting, based on the motion status of the display apparatus in the first direction, line-of-sight displacement of a user carried in the vehicle, where the line-of-sight displacement is displacement of a human eye of the user relative to the display apparatus in the first direction.

In a possible implementation, obtaining the motion status of the display apparatus in the vehicle in the first direction includes: obtaining a road surface excitation signal of a first road section, where the road surface excitation signal indicates excitation of the first road section on the vehicle in the first direction; and determining the motion status of the display apparatus in the first direction based on the road surface excitation signal and a suspension model of the vehicle, where the suspension model indicates a transfer feature of transfer of the road surface excitation signal to the display apparatus.

In a possible implementation, obtaining the motion status of the display apparatus in the vehicle in the first direction includes: obtaining acceleration information of the vehicle present when the vehicle travels on a first road section; and determining the motion status of the display apparatus in the first direction based on the acceleration information.

In a possible implementation, predicting, based on the motion status of the display apparatus in the first direction, the line-of-sight displacement of the user carried on the display apparatus includes: predicting, based on the motion status of the display apparatus in the first direction and a human-seat model, the line-of-sight displacement of the user carried on the display apparatus, where the human-seat model indicates a transfer feature of transfer of the motion status of the display apparatus to a head of the user.

In a possible implementation, the human-seat model is a four-degree-of-freedom human-seat lumped mass model.

In a possible implementation, the method further includes: obtaining sitting posture information of the user, where the sitting posture information indicates a sitting posture of the user in a seat; and determining a parameter of the human-seat model based on the sitting posture information.

In a possible implementation, the sitting posture information includes at least one of the following:

information about pressure of the user on the seat at at least one contact position between the user and the seat; and a backrest angle of the seat.

In a possible implementation, the method further includes: rendering a to-be-displayed image based on the line-of-sight displacement of the user; and displaying a rendered image by using the display apparatus.

According to the line-of-sight displacement prediction method provided in the second aspect, a head position of the user is accurately predicted based on the motion status of the display apparatus, to avoid a case in which identification is performed after the head position of the user has changed, so that the displayed image rendered based on the predicted line-of-sight displacement can match an actual change in the line-of-sight displacement of the user. This improves comfort of vehicle use.

For beneficial effect of the method provided in the possible implementations of the second aspect, refer to the beneficial effect brought by the possible implementations of the first aspect. Details are not described herein again.

According to a third aspect, an embodiment of this application provides a communication apparatus, including: an obtaining module, configured to obtain a motion status of a target object in a vehicle in a first direction, where the first direction is perpendicular to a horizontal plane or is perpendicular to a cabin floor plane of the vehicle, and the target object remains stationary relative to a cabin of the vehicle; and a processing module, configured to predict, based on the motion status of the target object in the first direction, line-of-sight displacement of a user carried on the target object, where the line-of-sight displacement is displacement of a human eye of the user relative to the target object in the first direction.

In a possible implementation, the obtaining module is specifically configured to: obtain a road surface excitation signal of a first road section, where the road surface excitation signal indicates excitation of the first road section on the vehicle in the first direction; and determine the motion status of the target object in the first direction based on the road surface excitation signal and a suspension model of the vehicle, where the suspension model indicates a transfer feature of transfer of the road surface excitation signal to the target object.

In a possible implementation, the obtaining module is specifically configured to: obtain acceleration information of the vehicle present when the vehicle travels on a first road section; and determine the motion status of the target object in the first direction based on the acceleration information.

In a possible implementation, the processing module is specifically configured to: predict, based on the motion status of the target object in the first direction and a human-seat model, the line-of-sight displacement of the user carried on the target object, where the human-seat model indicates a transfer feature of transfer of the motion status of the target object to a head of the user.

In a possible implementation, the human-seat model is a four-degree-of-freedom human-seat lumped mass model.

In a possible implementation, the obtaining module is further configured to: obtain sitting posture information of the user, where the sitting posture information indicates a sitting posture of the user in a seat; and determine a parameter of the human-seat model based on the sitting posture information.

In a possible implementation, the sitting posture information includes at least one of the following: information about pressure of the user on the seat at at least one contact position between the user and the seat; and a backrest angle of the seat.

In a possible implementation, the target object remains stationary relative to a display apparatus in the vehicle, and the line-of-sight displacement of the user is displacement of the human eye of the user relative to the display apparatus in the first direction.

In a possible implementation, a rendering display module is further included, configured to: render a to-be-displayed image based on the line-of-sight displacement of the user carried on the target object; and display a rendered image by using the display apparatus.

For beneficial effect of the control apparatus provided in the third aspect and the possible implementations of the third aspect, refer to the beneficial effect brought by the first aspect and the possible implementations of the first aspect. Details are not described herein again.

According to a fourth aspect, an embodiment of this application provides a communication apparatus, including: an obtaining module, configured to obtain a motion status of a display apparatus in a vehicle in a first direction, where the first direction is perpendicular to a horizontal plane or is perpendicular to a cabin floor plane of the vehicle, and the display apparatus remains stationary relative to a cabin of the vehicle; and a processing module, configured to predict, based on the motion status of the display apparatus in the first direction, line-of-sight displacement of a user, where the line-of-sight displacement is displacement of a human eye of the user relative to the display apparatus in the first direction.

In a possible implementation, the obtaining module is specifically configured to: obtain a road surface excitation signal of a first road section, where the road surface excitation signal indicates excitation of the first road section on the vehicle in the first direction; and determine the motion status of the display apparatus in the first direction based on the road surface excitation signal and a suspension model of the vehicle, where the suspension model indicates a transfer feature of transfer of the road surface excitation signal to the display apparatus.

In a possible implementation, the obtaining module is specifically configured to: obtain acceleration information of the vehicle present when the vehicle travels on a first road section; and determine the motion status of the display apparatus in the first direction based on the acceleration information.

In a possible implementation, the processing module is specifically configured to: predict, based on the motion status of the display apparatus in the first direction and a human-seat model, the line-of-sight displacement of the user, where the human-seat model indicates a transfer feature of transfer of the motion status of the display apparatus to a head of the user.

In a possible implementation, the human-seat model is a four-degree-of-freedom human-seat lumped mass model.

In a possible implementation, the obtaining module is further configured to: obtain sitting posture information of the user, where the sitting posture information indicates a sitting posture of the user in a seat; and determine a parameter of the human-seat model based on the sitting posture information.

In a possible implementation, the sitting posture information includes at least one of the following: information about pressure of the user on the seat at at least one contact position between the user and the seat; and a backrest angle of the seat.

In a possible implementation, a rendering display module is further included, configured to: render a to-be-displayed image based on the line-of-sight displacement of the user; and display a rendered image by using the display apparatus.

For beneficial effect of the control apparatus provided in the fourth aspect and the possible implementations of the fourth aspect, refer to the beneficial effect brought by the first aspect and the possible implementations of the first aspect. Details are not described herein again.

According to a fifth aspect, an embodiment of this application provides a computer program product, including computer program instructions. The computer program instructions enable a computer to perform the method in any one of the first aspect, the second aspect, or the possible implementations of the first aspect and the second aspect.

According to a fourth aspect, an embodiment of this application provides a chip, including a processor. The processor is configured to: invoke computer instructions from a memory and run the computer instructions, so that a device in which the chip is mounted performs the method in any one of the first aspect, the second aspect, or the possible implementations of the first aspect and the second aspect.

According to a fifth aspect, an embodiment of this application provides a computer-readable storage medium, configured to store computer program instructions. The computer program enables a computer to perform the method in any one of the first aspect, the second aspect, or the possible implementations of the first aspect and the second aspect.

According to a sixth aspect, an embodiment of this application provides an electronic device, including a processor and a memory. The memory is configured to store a computer program, and the processor is configured to: invoke and run the computer program stored in the memory, to perform the method in any one of the first aspect, the second aspect, or the possible implementations of the first aspect and the second aspect.

According to a seventh aspect, an embodiment of this application provides a vehicle, including the control apparatus provided in any one of the third aspect, the fourth aspect, or the possible implementations of the third aspect and the fourth aspect.

## BRIEF DESCRIPTION OF DRAWINGS

FIG. 1 is a diagram of an application scenario of line-of-sight displacement prediction according to an embodiment of this application;

FIG. 2 is a diagram of a hardware structure of a vehicle according to an embodiment of this application;

FIG. 3 is a schematic flowchart of a line-of-sight displacement prediction method according to an embodiment of this application;

FIG. 4 is a logic diagram of a line-of-sight displacement prediction method according to an embodiment of this application;

FIG. 5 is a diagram of a human-seat model according to an embodiment of this application;

FIG. 6 is a logic diagram of determining a model parameter according to an embodiment of this application;

FIG. 7 is a schematic flowchart of a display method according to an embodiment of this application;

FIG. 8 is a block diagram of a control apparatus of a vehicle according to an embodiment of this application;

FIG. 9 is a block diagram of another control apparatus of a vehicle according to an embodiment of this application; and

FIG. 10 is a diagram of a structure of an electronic device according to an embodiment of this application.

## DESCRIPTION OF EMBODIMENTS

The following describes technical solutions in embodiments of this application with reference to the accompanying drawings in embodiments of this application.

A vehicle in embodiments of this application may be an intelligent vehicle, for example, an autonomous driving vehicle that implements automatic control of all functions, or an assisted driving vehicle that implements automatic control of some functions to provide driving assistance, or may be a common vehicle. For ease of description, these are collectively referred to as a vehicle in the following.

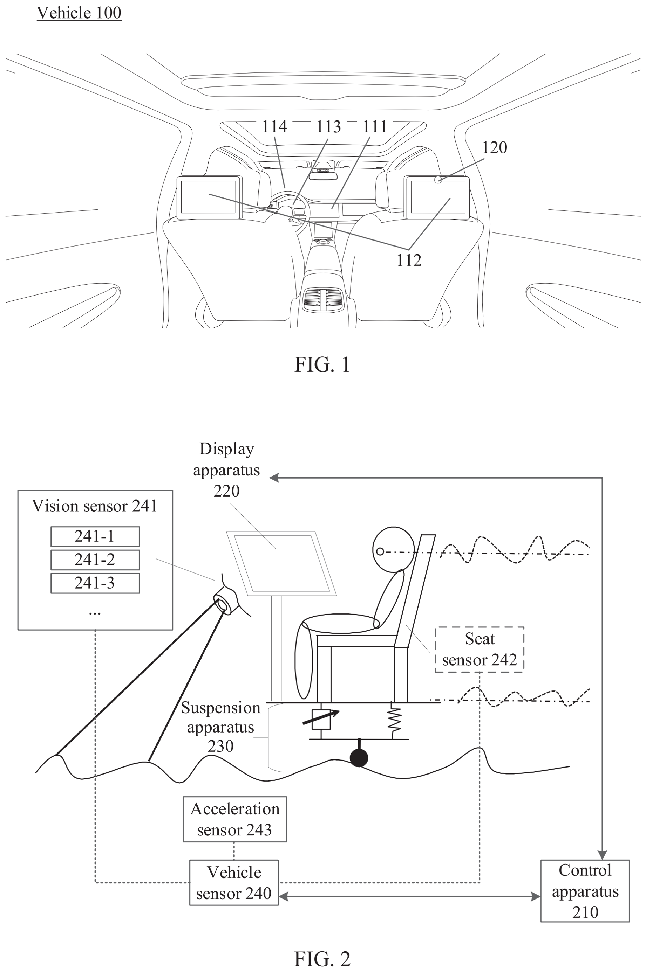

FIG. 1 is a diagram of an application scenario of line-of-sight displacement prediction according to an embodiment of this application. As shown in FIG. 1, a display apparatus 110 is usually deployed in a vehicle 100. The display apparatus 110 may be configured to implement image display or video playback, or the display apparatus 110 may be configured to implement human-machine interaction. For example, the display apparatus 110 may include some or all of a central control display 111, a rear-row display 112, a dashboard 113, and a head-up display system 114 in the vehicle. The head-up display system is also known as a head-up display (head-up display, HUD). A user (including a driver and/or a passenger) performs entertainment or does office work by viewing a displayed image of the display apparatus or performing human-machine interaction in a displayed image of the display apparatus. In a traveling process of the vehicle, a position of a body of the user changes with road undulations, and correspondingly, a position of a head and an eye of the user changes accordingly. In this case, a position difference exists between the display apparatus and the eye of the user. The continuously changing position difference causes poor comfort of the user in gazing at an image displayed by the display apparatus, and easily causes motion sickness.

Currently, it is considered that the displayed image of the display apparatus is adjusted to be match an eye position of the user, to alleviate discomfort of the user in gazing at the displayed image. For example, the eye position of the user is identified by using a camera (for example, a camera 120 deployed in the display apparatus) in a cabin, and then rendering processing is performed on the displayed image based on the identified eye position. When the display apparatus displays a rendered displayed image, the eye of the user may change, with road undulations, to be at a new position. As a result, the displayed image still cannot be match the eye position of the user, making it difficult to eliminate discomfort caused by a gaze of the user at a screen.

To improve comfort of the user in gazing at a displayed image of the display apparatus, in this application, the eye position of the user is accurately predicted based on a motion status of a target object (for example, a floor in the vehicle cabin) that carries the user, to avoid a case in which identification is performed after the eye position of the user has changed, so that a displayed image rendered based on the predicted eye position can adapt to an actual change in the eye position of the user. This improves comfort of the passenger in gazing at a screen.

In embodiments of this application, line-of-sight displacement, eye displacement, and head displacement are considered as same displacement, and may be replaced with each other, and meanings expressed by the three types of displacement are consistent.

In this application, an example in which the line-of-sight displacement prediction method is applied to the vehicle is merely used for description, but an application scenario of the line-of-sight displacement prediction method is not limited. In addition, in this application, predicted line-of-sight displacement is not limited to be applied to displayed image adjustment of the display apparatus, for example, based on the predicted line-of-sight displacement, an angle of a rear-view mirror may be adjusted and an irradiation angle (and/or an irradiation position) of a vehicle light may be adjusted.

FIG. 2 is a diagram of a hardware structure of a vehicle according to an embodiment of this application. As shown in FIG. 1, the vehicle 200 includes but is not limited to some or all of a control apparatus 210, a display apparatus 220, a suspension apparatus 230, and a vehicle sensor 240. The control apparatus 210 may be separately connected to the display apparatus 220, the suspension apparatus 230, and the vehicle sensor 240.

The control apparatus 210 may be any hardware or software with a processing capability, for example, may be implemented as a vehicle control system and/or a cabin control system. This is not limited in this application. When the control apparatus 210 includes a vehicle control system and a cabin control system, data processing may be implemented by the vehicle control system, and information push may be implemented by the cabin control system.

The display apparatus 220 is similar to the display apparatus 110 in FIG. 1. Details are not described again. In addition, the display apparatus 220 may alternatively be a display apparatus in a terminal device independent of the vehicle 200. The terminal device may be, for example, a mobile phone (Mobile Phone), a tablet computer (Pad), a desktop computer, or a wearable device. The wearable device may also be referred to as a wearable intelligent device, and is a general term of wearable devices that are intelligently designed and developed for daily wear by using a wearable technology, for example, glasses, gloves, watches, clothes, and shoes. The wearable device is a portable device that can be directly worn on a body or integrated into clothes or an accessory of a user.

The display apparatus 220 may be deployed at a fixed position in the vehicle, or the display apparatus 220 may be deployed at a movable position in the vehicle, or the display apparatus 220 may be a handheld device and the user holds the display apparatus 220 to watch or interact with the display apparatus 220.

The suspension apparatus 230 may be a force transfer connection apparatus between a vehicle frame (or a bearing vehicle body) and a vehicle bridge (for example, a tire), and a function of the suspension apparatus 230 is to transfer a force and torque between a wheel and the vehicle frame, and buffer an impact force of road undulations on the vehicle frame, to reduce vibration and ensure smooth traveling of the vehicle.

The suspension apparatus 230 may be implemented as an active suspension apparatus, a semi-active suspension apparatus, or a passive suspension apparatus. In the active suspension apparatus, rigidity and a damping coefficient of a suspension may be dynamically and adaptively adjusted based on a traveling condition (for example, a motion status of the vehicle and a road surface condition) of the vehicle, that is, the suspension actively outputs a force value, so that the suspension apparatus is in an optimal shock absorption state. In the semi-active suspension apparatus, a damping coefficient may be adjusted based on a traveling condition of the vehicle, to improve smoothness and stability of traveling of the vehicle. In the passive suspension apparatus, rigidity and a damping coefficient of a suspension do not change with an external status.

Based on the suspension apparatus 230, the vehicle 200 may include a sprung mass and an unsprung mass. The sprung mass and the unsprung mass are two relative concepts. The unsprung mass is a mass that is not supported by an elastic element (for example, a spring and/or a damper) in the suspension apparatus 230, and usually includes the wheel, a connection component, and another related component. The sprung mass is a mass supported by a suspension system, for example, a floor of a vehicle cabin. A target object in the following may be the sprung mass. The elastic element in the suspension apparatus 230 may belong to the sprung mass or the unsprung mass, or the elastic element in the suspension apparatus 230 may partially belong to the sprung mass and partially belong to the unsprung mass. This is not limited in this application.

Both the display apparatus 220 and the user may be carried on the sprung mass.

When the suspension apparatus 230 is a semi-active suspension apparatus or a passive suspension apparatus, the control apparatus 210 may obtain rigidity and a damping coefficient of the suspension apparatus 230. When the suspension apparatus 230 is an active suspension apparatus, the control apparatus 210 may obtain an active output force value of the suspension apparatus 230. In this way, a motion status of the sprung mass (for example, the floor of the vehicle cabin) is predicted.

The vehicle sensor 240 may include but is not limited to some or all of a vision sensor 241, a seat sensor 242, and an acceleration sensor 243.

The vision sensor 241 may be configured to implement machine vision, to sense an environment around the vehicle, for example, sense a road surface condition of a traveling road section of the vehicle. The vision sensor may include, for example, an image sensor 241-1, a radar detector 241-2, and an infrared detector 241-3. The radar detector 241-2 may include an ultrasonic radar detector, a millimeter-wave radar detector, and the like. The seat sensor 242 is configured to detect pressure applied by the user on a seat of the vehicle. The seat sensor 242 may include one or more pressure sensors. The acceleration sensor 243 may be configured to collect an acceleration of the vehicle. In this embodiment of this application, the acceleration collected by the acceleration sensor 243 may indicate the motion status of the sprung mass. In other words, the motion status of the sprung mass may be determined based on the acceleration collected by the acceleration sensor 243.

Further, the vehicle sensor 240 may send collected sensor data to the control apparatus 210, so that the control apparatus 210 implements line-of-sight displacement prediction based on the sensor data. In some embodiments, the control apparatus 210 sends predicted line-of-sight displacement to the display apparatus 220, so that the display apparatus 220 renders a displayed image based on the predicted line-of-sight displacement for display. In some other embodiments, the control apparatus 210 may determine a rendering parameter of a displayed image based on predicted line-of-sight displacement, and send the rendering parameter to the display apparatus 220, so that the display apparatus 220 renders the displayed image based on the rendering parameter for display.

It should be understood that, for ease of understanding and description, the following describes, by merely using a control apparatus in a vehicle as an execution body, the method provided in embodiments of this application. The control apparatus may be, for example, the control apparatus 210 in FIG. 2. The control apparatus may be implemented as a component, for example, a chip, a chip system, or another function module that is in the vehicle and that can invoke a program and execute the program.

However, it should be understood that this shall not constitute any limitation on the execution body of the method provided in this application. Any device may serve as the execution body of the method provided in embodiments of this application, provided that the device can run a program that records code of the method provided in embodiments of this application, to implement the method provided in embodiments of this application.

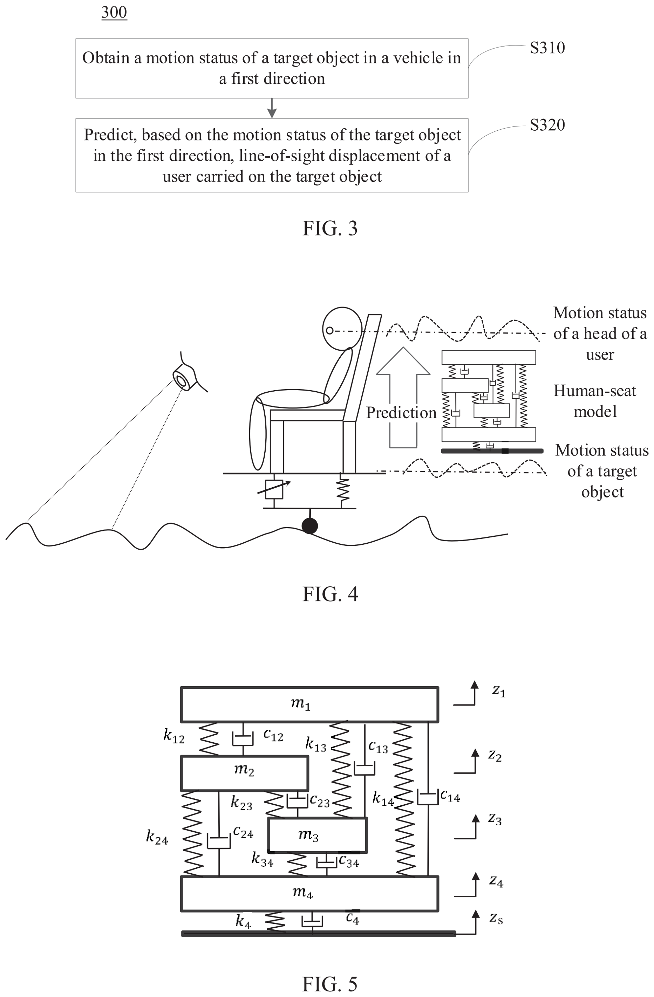

FIG. 3 is a schematic flowchart of a line-of-sight displacement prediction method 300 according to an embodiment of this application. As shown in FIG. 3, the method 300 may include some or all of the following steps.

S310: Obtain a motion status of a target object in a vehicle in a first direction.

S320: Predict, based on the motion status of the target object in the first direction, line-of-sight displacement of a user carried on the target object, where the line-of-sight displacement is displacement of a human eye of the user relative to the target object in the first direction.

The first direction is perpendicular to a horizontal plane or is perpendicular to a cabin floor plane of the vehicle. The cabin floor plane is a plane on which a floor in a vehicle cabin is located. It should be understood that the first direction may not be affected by road bumps and undulations. For example, when the vehicle travels on a flat road, the first direction may be perpendicular to the horizontal plane. For another example, when the vehicle travels on a sloped road section, the first direction may be perpendicular to the sloped road section, or may be perpendicular to the cabin floor plane present when the vehicle travels on the sloped road section.

The target object carries the user, and the target object remains stationary relative to the cabin of the vehicle. The target object may be a component that carries the user in the vehicle, for example, the floor in the vehicle cabin or a seat fastened to the vehicle cabin. Due to road undulations, the target object has the motion status in the first direction. The motion status may be displacement, a moving speed, or the like of the target object. As described above, the target object may be a sprung mass connected to a suspension apparatus of the vehicle. After road undulations are transferred to the target object through the suspension apparatus, the target object has the motion status in the first direction.

It should be noted that the motion status that is of the target object in the first direction and that is obtained by a control apparatus is related to road undulations of a first road section. The first road section may be a to-be-traveled road section of the vehicle, or may be a currently traveled road section of the vehicle. If the first road section is a to-be-traveled road section of the vehicle, the control apparatus may obtain a road surface excitation signal that is of the first road section and that is collected by a vision sensor, where the road surface excitation signal indicates excitation displacement formed by the first road section in the first direction due to road undulations. If the first road section is a currently traveled road section of the vehicle, the control apparatus may obtain acceleration information of the vehicle, where the acceleration information may reflect a motion status of the target object in the first direction present when the vehicle travels on the first road section. Because excitation of road undulations on an acceleration of the vehicle in the first direction precedes transfer of the road undulations to a head of the user, the control apparatus may still predict line-of-sight displacement of the user based on the motion status of the target object reflected by the acceleration information.

The motion status of the target object in the first direction is continuously transferred to the user as excitation, and the head of the user receives the excitation and generates displacement. Therefore, based on a transfer feature of transfer of excitation to the head of the user, head displacement (namely, line-of-sight displacement) of the user carried on the target object may be predicted based on the motion status of the target object in the first direction. For example, the motion status of the target object in the first direction may be transferred to the head of the user according to a transfer function.

Therefore, in this embodiment of this application, a head position of the user is accurately predicted based on the motion status of the target object that carries the user, to avoid a case in which identification is performed after the head position of the user has changed, so that vehicle control performed based on the predicted head position (for example, a rendered displayed image or an adjusted rear-view mirror angle) can match an actual change in the head position of the user. This improves comfort of vehicle use.

The following describes S310 by using an example in two implementation scenarios in which the first road section is a to-be-traveled road section or a currently traveled path.

Example 1: The first road section is a to-be-traveled road section of the vehicle. The first road section may be a path around the vehicle within a preset distance or preset travel duration. When the vehicle travels forward, the first road section is located in front of the vehicle. When the vehicle travels backward, the first road section is located behind the vehicle. When the vehicle travels in a steering direction, the first traveling path is located in the steering direction of the vehicle. The first road section may be determined based on a current pose of the vehicle and a traveling status at a previous moment, and the first traveling path may be further determined with reference to preset navigation.

In Example 1, the vision sensor may sense the first road section, to collect a road surface excitation signal, and send the road surface excitation signal to the control apparatus. The control apparatus may determine a motion status of the target object in the first direction based on the road surface excitation signal and a suspension model. The suspension model indicates a transfer feature of transfer of the road surface excitation signal to the target object. The suspension model may be established based on a dynamic equilibrium equation. For example, the road surface excitation signal and the motion status of the target object may satisfy the following two-degree-of-freedom suspension model. The two-degree-of-freedom suspension model includes a dynamic equilibrium equation (1) established based on a sprung mass and a dynamic equilibrium equation (2) established based on an unsprung mass:

$$m_s \ddot{z}_s + k_s(z_s - z_u) - u = 0 \qquad (1)$$

$$m_u \ddot{z}_u + k_u(z_u - q) + c_u(\dot{z}_u - \dot{q}) - k_s(z_s - z_u) + u = 0 \qquad (2)$$

Herein, $m_s$ is the sprung mass, $m_u$ is the unsprung mass, $k_s$ is suspension rigidity, and $k_u$ is tire rigidity. For a passive suspension or a semi-active suspension, $u$ is an output force value of a damper. For an active suspension, u is an output force value of a force value generator, namely, the active output force value described above. $z_s$ is displacement of the sprung mass relative to an equilibrium position of the sprung mass, $z_u$ is displacement of the unsprung mass relative to an equilibrium position of the unsprung mass, and q is excitation displacement that is of a road surface of the first road section in the first direction and that is obtained through previewing. q may be determined based on the road surface excitation signal. The equilibrium position may be a relative position of each component in the vehicle present when the vehicle is on a ground plane. $\ddot{z}_s$ indicates a second derivative of $z_s$, $\ddot{z}_u$ indicates a second derivative of $z_u$, $\dot{z}_u$ indicates a first derivative of $z_u$, and $\dot{q}$ indicates a first derivative of q. An identifier of a derivative in the following is similar to this. For brevity, details are not described again.

In Equation (1), there is a dynamic equilibrium between an inertia force $m_s \ddot{z}_s$ of the sprung mass, a spring force $k_s$ ($z_s$ - $z_u$) of the sprung mass, and an output force value u of the suspension. In Equation (2), there is a dynamic equilibrium between an inertia force $m_u \ddot{z}_u$ of the unsprung mass, an action force $k_u(z_u$ - q) + $c_u(\dot{z}_u$ - $\dot{q})$ between the unsprung mass and a ground, an action force $k_s(z_s$ - $z_u)$ between the sprung mass and the unsprung mass, and an output force value u of the suspension.

The control apparatus may obtain the motion status of the target object by solving the foregoing equation set. A calculation procedure is not limited in this embodiment of this application. For example, the motion status of the target object may be obtained through calculation by using a Runge-Kutta method or an Euler method. The following uses a fourth-order Runge-Kutta method as an example for description.

In a calculation process method based on a fourth-order Runge-Kutta method, a status variable is denoted as x = [$z_s$ - $z_u$ $\dot{z}_s$ $z_u$ - q $\dot{z}_u$]$^T$, where $z_s$ - $z_u$ indicates relative displacement of the sprung mass and the unsprung mass, $\dot{z}_s$ indicates an absolute speed of the sprung mass, $z_u$ - q indicates deformation of a tire, and $\dot{z}_u$, indicates an absolute speed of the unsprung mass; an output force value of the suspension apparatus is u = F(x); and Equations (1) and (2) are rewritten into a form of state equation, for example, Equation (3):

$$\dot{x} = A_1 x + B_1 \dot{q} + B'_1 u \qquad (3)$$

Herein,

$$A_1 = \begin{bmatrix} 0 & 1 & 0 & -1 \\ -\dfrac{k_s}{m_s} & 0 & 0 & 0 \\ 0 & 0 & 0 & 1 \\ \dfrac{k_s}{m_u} & 0 & -\dfrac{k_u}{m_u} & 0 \end{bmatrix}, \; B_1 = \begin{bmatrix} 0 \\ 0 \\ -1 \\ 0 \end{bmatrix}, \text{ and } B'_1 = \begin{bmatrix} 0 \\ \dfrac{1}{m_s} \\ 0 \\ -\dfrac{1}{m_u} \end{bmatrix}.$$

A specific procedure is as follows. $K_1 = h\left[A_1 x(i) + B_1 \dot{q}(i) + B'_1 F\left(x(i)\right)\right]$ is calculated, where $h$ is a time step, $\dot{q}(i)$ is a road surface excitation speed of a previous step, and $x(i)$ is a suspension status variable of the previous step; and in an active suspension apparatus or a semi-active suspension apparatus, $F(x(i))$ indicates a force value output according to a selected suspension control policy and a suspension status $x(i)$; or in a passive suspension apparatus, $F(x(i))$ indicates a force value output based on a suspension status $x(i)$ .

$K_2 = h\left[A_1\left(x(i) + \dfrac{K_1}{2}\right) + B_1 \dfrac{\dot{q}(i) + \dot{q}(i+1)}{2} + B'_1 F\left(x(i) + \dfrac{K_1}{2}\right)\right]$  is calculated, where $\dot{q}(i + 1)$ is a road surface excitation speed of a current step, and $F\left(x(i) + \frac{K_1}{2}\right)$ indicates a force value output according to a selected suspension control policy (the suspension control policy is not included when a passive suspension apparatus is used) and a suspension status $x(i) + \frac{K_1}{2}$. $K_3 = h\left[A_1\left(x(i) + \frac{K_2}{2}\right) + B_1\frac{\dot{q}(i) + \dot{q}(i+1)}{2} + B'_1 F\left(x(i) + \frac{K_2}{2}\right)\right]$ is calculated, where $F\left(x(i) + \frac{K_2}{2}\right)$ indicates a force value output according to a selected suspension control policy (the suspension control policy is not included when a passive suspension apparatus is used) and a suspension status $x(i) + \frac{K_2}{2}$. $K_4 = h[A_1(x(i) + K_3) + B_1\dot{q}(i+1) + B'_1 F(x(i) + K_3)]$ is calculated, where $F(x(i) + K_3)$ indicates a force value output according to a selected suspension control policy (the suspension control policy is not included when a passive suspension apparatus is used) and a suspension status $x(i) + K_3$. A suspension status variable $x(i+1) = x(i) + \frac{1}{6}(K_1 + 2K_2 + 2K_3 + K_4)$ under road surface excitation of the current step is calculated. The time step may be determined based on computing power of the control apparatus. In an implementable range of computing power of the control apparatus, a smaller time step indicates a more accurate calculation result.

After determining the suspension status variable $x(i + 1)$ under road surface excitation of the current step, the control apparatus may calculate, based on $x(i + 1)$, a moving speed $\dot{z}_s(i + 1) = [0\ 1\ 0\ 0]x(i + 1)$ that is of the sprung mass (namely, the target object) in the first direction and that corresponds to the current step. The control apparatus may use the moving speed $\dot{z}_s(i + 1)$ of the sprung mass as the motion status to predict subsequent line-of-sight displacement of the user, or the control apparatus may perform integration on the moving speed $\dot{z}_s(i + 1)$ of the sprung mass to obtain displacement $z_s$ of the sprung mass in the first direction, and use the displacement $z_s$ of the sprung mass as the motion status to predict a line-of-sight position of a candidate user.

Example 2: The first road section is a currently traveled road section of the vehicle. The first road section may be a path on which the vehicle currently travels within a preset distance or preset travel duration.

In Example 2, an acceleration sensor collects the acceleration information of the vehicle. When the acceleration sensor is deployed within a preset range of a suspension, acceleration information around the suspension collected by the acceleration sensor may directly reflect the motion status of the target object. For example, a speed of the target object is obtained after integration is performed on an acceleration of the target object collected by the acceleration sensor. When the acceleration sensor is deployed outside a preset range of a suspension, the motion status of the target object may be determined by analyzing the acceleration information collected by the acceleration sensor.

To improve prediction accuracy, the control apparatus may accurately predict the line-of-sight displacement of the user with reference to a human-seat model. Refer to FIG. 4. The motion status of the target object is transferred to the head of the user based on a transfer feature embodied in the human-seat model, so that the head of the user has a corresponding motion status, causing the line-of-sight displacement of the user. The human-seat model indicates a transfer feature of transfer of the motion status of the target object to the head of the user. This embodiment of this application is described by using a four-degree-of-freedom human-seat lumped mass model as an example. It should be understood that a two-degree-of-freedom human-seat lumped mass model, a three-degree-of-freedom human-seat lumped mass model, and the like all fall within the protection scope of this application.

For the four-degree-of-freedom human-seat lumped mass model, refer to FIG. 5. $m_1$ is a head mass of the user, and $m_2$, $m_3$, and $m_3$ are lumped masses of other parts of a human body; $k_{12}$, $k_{13}$, $k_{14}$, $k_{24}$, $k_{23}$, $k_{34}$, and $k_4$ are rigidity between parts of the human body and between the human body and the target object; $c_{12}$, $c_{13}$, $c_{14}$, $c_{24}$, $c_{23}$, $c_{34}$, and $c_4$ are damping between the parts of the human body and between the human body and the target object; $z_s$ is displacement of the target object in the first direction; $z_1$ is displacement of the head of the user in the first direction; and $z_2$, $z_3$, and $z_4$ are vertical displacement of other parts of the human body.

In an actual traveling process of the vehicle, the user is subject to random motion that includes a wide frequency range. In the human-seat lumped mass model shown in FIG. 5, for simple harmonic motion input at different frequencies (for example, input to the user by the seat), an output motion amplitude of the head of the user has different change factors. Simple harmonic motion near a resonance frequency is amplified, and simple harmonic motion far away from the resonance frequency is amplified by a very small factor or reduced.

The human-seat lumped mass parameter model follows the following dynamic equations (4), (5), (6), and (7):

$$m_1\ddot{z}_1 = c_{12}(\dot{z}_2 - \dot{z}_1) + c_{13}(\dot{z}_3 - \dot{z}_1) + c_{14}(\dot{z}_4 - \dot{z}_1) + k_{12}(z_2 - z_1) + k_{13}(z_3 - z_1) +$$
$$k_{14}(z_4 - z_1) \qquad (4)$$

$$m_2\ddot{z}_2 = c_{12}(\dot{z}_1 - \dot{z}_2) + c_{23}(\dot{z}_3 - \dot{z}_2) + c_{24}(\dot{z}_4 - \dot{z}_2) + k_{12}(z_1 - z_2) + k_{23}(z_3 - z_2) +$$
$$k_{24}(z_4 - z_2) \qquad (5)$$

$$m_3\ddot{z}_3 = c_{13}(\dot{z}_1 - \dot{z}_3) + c_{23}(\dot{z}_2 - \dot{z}_3) + c_{34}(\dot{z}_4 - \dot{z}_3) + k_{13}(z_1 - z_3) + k_{23}(z_2 - z_3) +$$
$$k_{34}(z_4 - z_3) \qquad (6)$$

$$m_4\ddot{z}_4 = c_{14}(\dot{z}_1 - \dot{z}_4) + c_{24}(\dot{z}_2 - \dot{z}_4) + c_{34}(\dot{z}_3 - \dot{z}_4) + c_4(\dot{z}_s - \dot{z}_4) + k_{14}(z_1 - z_4) +$$
$$k_{24}(z_2 - z_4) + k_{34}(z_3 - z_4) + k_4(z_s - z_4) \qquad (7)$$

To solve the foregoing differential equation, this embodiment provides a calculation procedure based on a fourth-order Runge-Kutta method. However, a method in this patent is not limited to the method, and other numerical solutions such as an Euler method may also be used in this patent. Rewriting the foregoing formulas into a form of state equation is as follows:

$$\dot{x} = A_2 x + B_2 \dot{z}_s$$

A status variable is $x = [z_1 - z_2\ z_2 - z_3\ z_3 - z_4\ z_4 - z_s\ \dot{z}_1\ \dot{z}_2\ \dot{z}_3\ \dot{z}_4]^T$,

$$A_2 =$$

$$\begin{bmatrix}
0 & 0 & 0 & 0 & 1 & -1 & 0 & 0 \\
0 & 0 & 0 & 0 & 0 & 1 & -1 & 0 \\
0 & 0 & 0 & 0 & 0 & 0 & 1 & -1 \\
0 & 0 & 0 & 0 & 0 & 0 & 0 & 1 \\
-\frac{k_{12}}{m_1} - \frac{k_{13}}{m_1} - \frac{k_{14}}{m_1} & \frac{k_{13}}{m_1} - \frac{k_{14}}{m_1} & -\frac{k_{14}}{m_1} & 0 & -\frac{c_{12}}{m_1} - \frac{c_{13}}{m_1} - \frac{c_{14}}{m_1} & \frac{c_{12}}{m_1} & \frac{c_{13}}{m_1} & \frac{c_{14}}{m_1} \\
\frac{k_{12}}{m_2} & -\frac{k_{23}}{m_2} - \frac{k_{24}}{m_2} & -\frac{k_{24}}{m_2} & 0 & \frac{c_{12}}{m_2} & -\frac{c_{12}}{m_2} - \frac{c_{23}}{m_2} - \frac{c_{24}}{m_2} & \frac{c_{23}}{m_2} & \frac{c_{24}}{m_2} \\
\frac{k_{13}}{m_3} & \frac{k_{13}}{m_3} + \frac{k_{23}}{m_3} & -\frac{k_{34}}{m_3} & 0 & \frac{c_{13}}{m_3} & \frac{c_{23}}{m_3} & -\frac{c_{13}}{m_3} - \frac{c_{23}}{m_3} - \frac{c_{34}}{m_3} & \frac{c_{34}}{m_3} \\
\frac{k_{14}}{m_4} & \frac{k_{14}}{m_4} + \frac{k_{24}}{m_4} & \frac{k_{14}}{m_4} + \frac{k_{24}}{m_4} + \frac{k_{34}}{m_4} & -\frac{k_4}{m_4} & \frac{c_{14}}{m_4} & \frac{c_{24}}{m_4} & \frac{c_{34}}{m_4} & -\frac{c_{14}}{m_4} - \frac{c_{24}}{m_4} - \frac{c_{34}}{m_4}
\end{bmatrix},$$

and

$$B_2 = \begin{bmatrix} 0 \\ 0 \\ 0 \\ -1 \\ 0 \\ 0 \\ 0 \\ \frac{c_4}{m_4} \end{bmatrix}.$$

A specific procedure is as follows.

$K_1 = h[A_2 x(j) + B_2 \dot{z}_s(j)]$ is calculated, where $h$ is a time step, $\dot{z}_s(j)$ is a moving speed of a sprung mass of a previous step in the first direction, the moving speed $\dot{z}_s(j)$ of the sprung mass of the previous step in the first direction may be a moving speed that is of the sprung mass and that is determined in a latest step in a motion status that is of the sprung mass and that is determined through rolling, for example, $\dot{z}_s(i + 1)$ shown in the foregoing example, and $x(j)$ is a human-seat model status variable of the previous step. $K_2 = h\left[A_2\left(x(j) + \frac{K_1}{2}\right) + B_2\frac{\dot{z}_s(j) + \dot{z}_s(j+1)}{2}\right]$ is calculated, where $\dot{z}_s(j + 1)$ is a moving speed of the sprung mass of a current step in the first direction. $K_3 = h\left[A_2\left(x(j) + \frac{K_2}{2}\right) + B_2\frac{\dot{z}_s(j) + \dot{z}_s(j+1)}{2}\right]$ is calculated. $K_4 = h[A_2(x(j) + K_3) + B_2\dot{z}_s(j + 1)]$ is calculated.

A human-seat model status variable $x(j+1) = x_j + \frac{1}{6}(K_1 + 2K_2 + 2K_3 + K_4)$ corresponding to the current step is calculated.

After determining the human-seat model status variable $x(j+1)$ under road surface excitation of the current step, the control apparatus may calculate, based on $x(j+1)$, displacement $y(i+1) = [1\,1\,1\,1\,0\,0\,0\,0]x(i+1)$ that is of the head of the user relative to the target object in the first direction and that corresponds to the current step. In this case, a motion status of the head of the user in the first direction is obtained through calculation based on the moving speed of the sprung mass.

It should be understood that, that the transfer feature of transfer of the motion status of the target object to the head of the user is expressed based on the human-seat model is not limit in this application. For example, the human-seat model may be replaced with a filter, including a digital filter and/or a hardware filter.

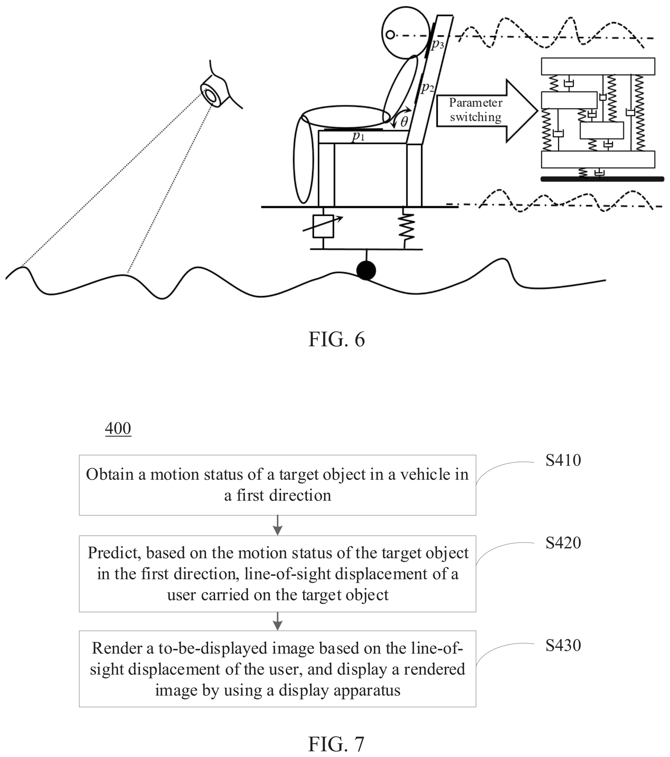

To enable the human-seat model to accurately reflect the transfer feature of transfer of the motion status of the target object to the head of the user, with reference to FIG. 6, the control apparatus may obtain sitting posture information of the user, where the sitting posture information indicates a sitting posture of the user in the seat, determine a parameter of the human-seat model based on the sitting posture information, and adjust the parameter of the human-seat model, so that the human-seat model can be dynamically adjusted with a change of the sitting posture of the user, to provide accurate transfer features for different sitting postures of the user.

Optionally, the sitting posture information may include but is not limited to at least one of pressure information at a contact position between the user and the seat and a backrest angle of the seat. There may be one or more contact positions between the user and the seat. Refer to FIG. 6. At a contact position between a hip and/or a leg of the user and the seat, the user applies pressure $p_1$ to the seat. At a contact position between a back of the user and the seat, the user applies pressure $p_2$ to the seat. At a contact position between the head of the user and the seat, the user applies pressure $p_3$ to the seat. The backrest angle of the seat is $\theta$. For example, a seat sensor may be deployed at each contact position between the user and the seat in the seat, to collect pressure applied by the user at each contact position.

Optionally, the control apparatus may preset a correspondence between the sitting posture information and the parameter of the human-seat model. In the correspondence, the sitting posture information is in a one-to-one correspondence with the parameter of the human-seat model, or a range of the sitting posture information is in a one-to-one correspondence with the parameter of the human-seat model. The control apparatus may determine the parameter of the human-seat model in the correspondence based on the obtained sitting posture information or the range of the sitting posture information.

FIG. 7 is a schematic flowchart of a display method according to an embodiment of this application. The method 400 includes some or all of the following processes.

S410: Obtain a motion status of a target object in a vehicle in a first direction.

S420: Predict, based on the motion status of the target object in the first direction, line-of-sight displacement of a user carried on the target object, where the line-of-sight displacement is displacement of a human eye of the user relative to a display apparatus in the first direction.

S430: Render a to-be-displayed image based on the line-of-sight displacement of the user, and display a rendered image by using the display apparatus.

The display apparatus remains stationary relative to the target object. In one understanding, the display apparatus may be carried on the target object, and the display apparatus is securely mounted on the target object, so that the display apparatus remains stationary relative to the target object. In another understanding, the display apparatus and the target object are integrated, for example, the target object includes the display apparatus. Therefore, implementation displacement of the user may be understood as the displacement of the human eye of the user relative to the display apparatus in the first direction. S410 and S420 are similar to S310 and S320 in the embodiment shown in FIG. 3. For brevity, details are not described herein again.

In some embodiments, it may be considered that the motion status of the target object excites the display apparatus carried on the target object, so that relative displacement exists between the display apparatus and the target object. In this case, a motion status of the display apparatus may be predicted based on the motion status of the target object, to predict relative displacement between the human eye of the user and the display apparatus.

In S430, a control apparatus may determine a rendering parameter based on the line-of-sight displacement, and send the rendering parameter to the display apparatus, so that the display apparatus renders a to-be-displayed image based on the rendering parameter, to display a rendered image. Alternatively, a control apparatus may output the line-of-sight displacement, for example, send the line-of-sight displacement to the display apparatus, and the display apparatus renders a to-be-displayed image based on the line-of-sight displacement, to display a rendered image. When the control apparatus is not a cabin controller (for example, a vehicle control unit), the control apparatus may send the line-of-sight displacement to a cabin controller, and the cabin controller determines a rendering parameter based on the line-of-sight displacement, and sends the rendering parameter to the display apparatus, so that the display apparatus renders a to-be-displayed image based on the rendering parameter, to display a rendered image.

It should be understood that the displayed image played by the display apparatus is rendered based on the predicted line-of-sight displacement of the user. Therefore, the displayed image played by the display apparatus can be match a line-of-sight position of the user when a line of sight of the user actually shifts, to alleviate discomfort caused by a gaze of the user at a screen in a traveling process of the vehicle, and improve comfort of vehicle use.

In the foregoing embodiments, "at least one" means one or more, and "a plurality of" means two or more. "And/or" describes an association relationship between associated objects and indicates that three relationships may exist. For example, A and/or B may indicate the following cases: Only A exists, both A and B exist, and only B exists, where A and B may be singular or plural. The character "/" usually indicates an "or" relationship between the associated objects.

In embodiments of this application, "connection" may indicate a direct connection or an indirect connection, or may indicate an electrical connection or a communication connection. For example, a connection between two electrical elements A and B may mean that A is directly connected to B, or may mean that A is indirectly connected to B through another electrical element or a connection medium, so that an electrical signal can be transmitted between A and B. For another example, a connection between two devices A and B may mean that A is directly connected to B, or may mean that A is indirectly connected to B through another communication device or a communication medium, provided that A and B can communicate with each other.

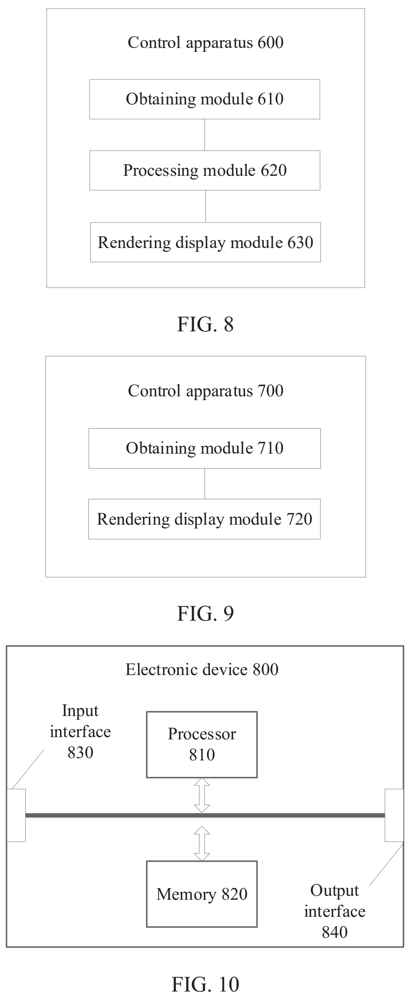

FIG. 8 is a block diagram of a control apparatus of a vehicle according to an embodiment of this application. As shown in FIG. 8, the control apparatus 600 includes an obtaining module 610 and a processing module 620.

The obtaining module 610 may be configured to obtain a motion status of a target object in a vehicle in a first direction, where the first direction is perpendicular to a ground plane, and the motion status of the target object in the first direction is related to road undulations of a first road section. The processing module 620 may be configured to predict, based on the motion status of the target object in the first direction, line-of-sight displacement of a user carried on the target object, where the line-of-sight displacement is displacement of a line of sight of the user relative to the target object in the first direction.

In some embodiments, the control apparatus 600 further includes a rendering display module 630. The rendering display module 630 is configured to render a displayed image in a display apparatus. The target object carries the display apparatus.

FIG. 9 is a block diagram of another control apparatus of a vehicle according to an embodiment of this application. As shown in FIG. 9, the control apparatus 700 includes an obtaining module 710 and a rendering display module 720.

The obtaining module 710 is configured to obtain line-of-sight displacement of a user carried on a target object. The rendering display module 720 is configured to render a to-be-displayed image, and display a rendered image by using a display apparatus, where the target object carries the display apparatus.

It should be understood that a specific process in which modules perform the foregoing corresponding steps is described in detail in the foregoing method embodiments. For brevity, details are not described herein again.

Division of modules in apparatuses 600 and 700 is merely logic function division. During actual implementation, all or some of the modules may be integrated into one physical entity, or may be physically separated.

FIG. 10 is a diagram of a structure of an electronic device 800 according to an embodiment of this application. The electronic device 800 may include a processor 810 and a memory 820. The processor 810 and the memory 820 communicate with each other through an internal connection path. The memory 820 is configured to store instructions. The processor 810 is configured to execute the instructions stored in the memory 820.

Optionally, the memory 820 may include a read-only memory and a random access memory, and provide instructions and data for the processor 810. The memory 820 may be a separate component, or may be integrated in the processor 810.

In some embodiments, the electronic device 800 may further include an input interface 830. The processor 810 may control the input interface 830 to communicate with another device or chip, and specifically, may obtain information or data sent by the another device or chip.

In some embodiments, the electronic device 800 may further include an output interface 840. The processor 810 may control the output interface 840 to communicate with another device or chip, and specifically, may output information or data to the another device or chip.

In some embodiments, the electronic device 800 may implement corresponding procedures of the methods in embodiments of this application. For brevity, details are not described herein again.

It should be understood that the processor in embodiments of this application may be an integrated circuit chip, and has a data processing capability. In an implementation process, steps in the foregoing method embodiments can be implemented by using a hardware integrated logic circuit in the processor, or by using instructions in a form of software. The processor may be a general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a discrete gate or a transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware and software modules in a decoding processor. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a non-volatile memory, or may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and is used as an external cache. Through an example description rather than a limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory of the systems and methods described in this specification is intended to include but is not limited to these and any memory of another suitable type.

It should be understood that the foregoing memory is an example description rather than a limitative description. For example, the memory in embodiments of this application may alternatively be a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), a direct rambus random access memory (Direct Rambus RAM, DR RAM), or the like. In other words, the memory in embodiments of this application is intended to include but is not limited to these and any memory of another suitable type.

An embodiment of this application further provides an electronic device. The electronic device may be implemented as the control apparatus in embodiments of this application, and includes a processor and a memory. The memory is configured to store a computer program, and the processor is configured to: invoke and run the computer program stored in the memory, to perform corresponding procedures in the methods in embodiments of this application. For brevity, details are not described herein again.

An embodiment of this application further provides a computer-readable storage medium, configured to store a computer program.

In some embodiments, the computer-readable storage medium may be used in the control apparatus in embodiments of this application, and the computer program enables a computer to perform corresponding procedures in the methods in embodiments of this application. For brevity, details are not described herein again.

An embodiment of this application further provides a computer program product, including computer program instructions.

In some embodiments, the computer program product may be used in the control apparatus in embodiments of this application, and the computer program instructions enable a computer to perform corresponding procedures in the methods in embodiments of this application. For brevity, details are not described herein again.

An embodiment of this application further provides a computer program.

In some embodiments, the computer program may be applied to the control apparatus in embodiments of this application. When the computer program is run on a computer, the computer is enabled to perform corresponding procedures in the methods in embodiments of this application. For brevity, details are not described herein again.

An embodiment of this application further provides a vehicle.

In some embodiments, the vehicle includes the control apparatus in embodiments of this application, and the control apparatus is used for the method in any embodiment of this application.

A person of ordinary skill in the art may be aware that, in combination with the examples described in embodiments disclosed in this specification, modules and algorithm steps may be implemented by electronic hardware or a combination of computer software and electronic hardware. Whether the functions are performed by hardware or software depends on specific applications and design constraints of the technical solutions. A person skilled in the art may use different methods to implement the described functions for each specific application. However, it should not be considered that the implementation goes beyond the scope of this application.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1.  A line-of-sight displacement prediction method, comprising:

    obtaining a motion status of a target object in a vehicle in a first direction, wherein the first direction is perpendicular to a horizontal plane or is perpendicular to a cabin floor plane of the vehicle, and the target object remains stationary relative to a cabin of the vehicle; and
    predicting, based on the motion status of the target object in the first direction, line-of-sight displacement of a user carried on the target object, wherein the line-of-sight displacement is displacement of a human eye of the user relative to the target object in the first direction.

2.  The method according to claim 1, wherein obtaining the motion status of the target object in the vehicle in the first direction comprises:

    obtaining a road surface excitation signal of a first road section, wherein the road surface excitation signal indicates excitation of the first road section on the vehicle in the first direction; and
    determining the motion status of the target object in the first direction based on the road surface excitation signal and a suspension model of the vehicle, wherein the suspension model indicates a transfer feature of transfer of the road surface excitation signal to the target object.

3.  The method according to claim **1,** wherein obtaining the motion status of the target object in the vehicle in the first direction comprises:

    obtaining acceleration information of the vehicle present when the vehicle travels on a first road section; and
    determining the motion status of the target object in the first direction based on the acceleration information.

4.  The method according to any one of claims 1 to 3, wherein predicting, based on the motion status of the target object in the first direction, the line-of-sight displacement of the user carried on the target object comprises:
    predicting, based on the motion status of the target object in the first direction and a human-seat model, the line-of-sight displacement of the user carried on the target object, wherein the human-seat model indicates a transfer feature of transfer of the motion status of the target object to a head of the user.

5.  The method according to claim 4, wherein the human-seat model is a four-degree-of-freedom human-seat lumped mass model.

6.  The method according to claim 4 or 5, wherein the method further comprises:

    obtaining sitting posture information of the user, wherein the sitting posture information indicates a sitting posture of the user in a seat; and
    determining a parameter of the human-seat model based on the sitting posture information.

7.  The method according to claim 6, wherein the sitting posture information comprises at least one of the following:

    information about pressure of the user on the seat at at least one contact position between the user and the seat; and
    a backrest angle of the seat.

8.  The method according to any one of claims 1 to 7, wherein the target object remains stationary relative to a display apparatus in the vehicle, and the line-of-sight displacement of the user is displacement of the human eye of the user relative to the display apparatus in the first direction.

9.  The method according to claim 8, wherein the method further comprises:

    rendering a to-be-displayed image based on the line-of-sight displacement of the user carried on the target object; and

displaying a rendered image by using the display apparatus.

10. A communication apparatus, comprising:

an obtaining module, configured to obtain a motion status of a target object in a vehicle in a first direction, wherein the first direction is perpendicular to a horizontal plane or is perpendicular to a cabin floor plane of the vehicle, and the target object remains stationary relative to a cabin of the vehicle; and
a processing module, configured to predict, based on the motion status of the target object in the first direction, line-of-sight displacement of a user carried on the target object, wherein the line-of-sight displacement is displacement of a human eye of the user relative to the target object in the first direction.

11. The apparatus according to claim 10, wherein the obtaining module is specifically configured to:

obtain a road surface excitation signal of a first road section, wherein the road surface excitation signal indicates excitation of the first road section on the vehicle in the first direction; and
determine the motion status of the target object in the first direction based on the road surface excitation signal and a suspension model of the vehicle, wherein the suspension model indicates a transfer feature of transfer of the road surface excitation signal to the target object.

12. The apparatus according to claim 10, wherein the obtaining module is specifically configured to:

obtain acceleration information of the vehicle present when the vehicle travels on a first road section; and
determine the motion status of the target object in the first direction based on the acceleration information.

13. The apparatus according to any one of claims 10 to 12, wherein the processing module is specifically configured to:
predict, based on the motion status of the target object in the first direction and a human-seat model, the line-of-sight displacement of the user carried on the target object, wherein the human-seat model indicates a transfer feature of transfer of the motion status of the target object to a head of the user.

14. The apparatus according to claim 13, wherein the human-seat model is a four-degree-of-freedom human-seat lumped mass model.

15. The apparatus according to claim 13 or 14, wherein the obtaining module is further configured to:

obtain sitting posture information of the user, wherein the sitting posture information indicates a sitting posture of the user in a seat; and
determine a parameter of the human-seat model based on the sitting posture information.

16. The apparatus according to claim 15, wherein the sitting posture information comprises at least one of the following:

information about pressure of the user on the seat at at least one contact position between the user and the seat; and
a backrest angle of the seat.

17. The apparatus according to any one of claims 10 to 16, wherein the target object remains stationary relative to a display apparatus in the vehicle, and the line-of-sight displacement of the user is displacement of the human eye of the user relative to the display apparatus in the first direction.

18. The apparatus according to claim 17, further comprising a rendering display module, wherein the rendering display module is configured to:

render a to-be-displayed image based on the line-of-sight displacement of the user carried on the target object; and
display a rendered image by using the display apparatus.

19. A computer program product, comprising computer program instructions, wherein the computer program instructions enable a computer to perform the method according to any one of claims 1 to 9.

20. A computer-readable storage medium, configured to store computer program instructions, wherein the computer program enables a computer to perform the method according to any one of claims 1 to 9.

21. A chip, comprising a processor, wherein the processor is configured to: invoke computer instructions from a memory and run the computer instructions, so that a device in which the chip is mounted performs the method according to any one of claims 1 to 9.

22. An electronic device, comprising a processor and a memory, wherein the memory is configured to store a computer program, and the processor is configured to: invoke and run the computer program stored in the memory, to perform the method according to any one of claims 1 to 9.

23. A vehicle, comprising a control apparatus, wherein the control apparatus is configured to perform the method according to any one of claims 1 to 9.

Vehicle 100

FIG. 1

FIG. 2

300

| |
|---|
| Obtain a motion status of a target object in a vehicle in a first direction |

S310

| |
|---|
| Predict, based on the motion status of the target object in the first direction, line-of-sight displacement of a user carried on the target object |

S320

FIG. 3

Motion status of a head of a user

Human-seat model

Prediction

Motion status of a target object

FIG. 4

FIG. 5

FIG. 6

400

| Obtain a motion status of a target object in a vehicle in a first direction | — S410 |

| Predict, based on the motion status of the target object in the first direction, line-of-sight displacement of a user carried on the target object | — S420 |

| Render a to-be-displayed image based on the line-of-sight displacement of the user, and display a rendered image by using a display apparatus | — S430 |

FIG. 7

Control apparatus 600

Obtaining module 610

Processing module 620

Rendering display module 630

FIG. 8

Control apparatus 700

Obtaining module 710

Rendering display module 720

FIG. 9

Electronic device 800

Input interface 830

Processor 810

Memory 820

Output interface 840

FIG. 10

## INTERNATIONAL SEARCH REPORT

| International application No. |
| --- |
| **PCT/CN2024/084333** |

| A. | CLASSIFICATION OF SUBJECT MATTER |
| --- | --- |

G06T7/73(2017.01)i;  G06F9/451(2018.01)i

According to International Patent Classification (IPC) or to both national classification and IPC

| B. | FIELDS SEARCHED |
| --- | --- |

Minimum documentation searched (classification system followed by classification symbols)

  IPC:  G06T B60R

Documentation searched other than minimum documentation to the extent that such documents are included in the fields searched

Electronic data base consulted during the international search (name of data base and, where practicable, search terms used)

  CNTXT, ENTXT, DWPI, CNKI: 车, 显示, 屏, 幕, 晕, 眩, 疲劳, 颠簸, 竖直, 垂直, 运动, 状态, vehicle, screen?, panel?, display +, dizz+, vertical, movement, speed, acceleration

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 113778601 A (BOE TECHNOLOGY GROUP CO., LTD.) 10 December 2021 (2021-12-10)<br>description, paragraphs 60-154, and figures 1-7 | 1, 3, 8-10, 12, 17-23 |
| A | CN 114655141 A (NIO AUTOMOTIVE TECHNOLOGY (ANHUI) CO., LTD.) 24 June 2022 (2022-06-24)<br>entire document | 1-23 |
| A | US 10589679 B1 (ZOOX, INC.) 17 March 2020 (2020-03-17)<br>entire document | 1-23 |
| A | CN 112109515 A (EVERGRANDE NEW ENERGY AUTOMOBILE INVESTMENT HOLDING GROUP CO., LTD.) 22 December 2020 (2020-12-22)<br>entire document | 1-23 |
| A | CN 114043932 A (CHINA AUTOMOTIVE INNOVATION CORPORATION) 15 February 2022 (2022-02-15)<br>entire document | 1-23 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **14 June 2024** | **24 June 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/084333**

| C. | DOCUMENTS CONSIDERED TO BE RELEVANT | |
|---|---|---|
| Category* | Citation of document, with indication, where appropriate, of the relevant passages | Relevant to claim No. |
| A | CN 114494430 A (BEIJING CO WHEELS TECHNOLOGY CO., LTD.) 13 May 2022 (2022-05-13)<br>entire document | 1-23 |
| A | CN 115087566 A (SONY CORPORATION) 20 September 2022 (2022-09-20)<br>entire document | 1-23 |

Form PCT/ISA/210 (second sheet) (July 2022)

**INTERNATIONAL SEARCH REPORT**
Information on patent family members

International application No.

**PCT/CN2024/084333**

| Patent document cited in search report | | | Publication date (day/month/year) | Patent family member(s) | | | Publication date (day/month/year) |
|---|---|---|---|---|---|---|---|
| CN | 113778601 | A | 10 December 2021 | None | | | |
| CN | 114655141 | A | 24 June 2022 | None | | | |
| US | 10589679 | B1 | 17 March 2020 | US | 2020189466 | A1 | 18 June 2020 |
| | | | | US | 11285874 | B2 | 29 March 2022 |
| CN | 112109515 | A | 22 December 2020 | None | | | |
| CN | 114043932 | A | 15 February 2022 | None | | | |
| CN | 114494430 | A | 13 May 2022 | None | | | |
| CN | 115087566 | A | 20 September 2022 | WO | 2021166801 | A1 | 26 August 2021 |
| | | | | US | 2023093446 | A1 | 23 March 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310379540